(19) Europäisches Patentamt
European Patent Office
Office européen des brevets

(11) Veröffentlichungsnummer: **0 030 291**
A2

(12) **EUROPÄISCHE PATENTANMELDUNG**

(21) Anmeldenummer: **80107116.8**

(22) Anmeldetag: **17.11.80**

(51) Int. Cl.³: **C 09 B 67/48,** C 09 B 67/10, C 09 B 29/08, D 06 P 3/54

(30) Priorität: **29.11.79 DE 2948016**

(43) Veröffentlichungstag der Anmeldung: **17.06.81 Patentblatt 81/24**

(84) Benannte Vertragsstaaten: **AT BE CH DE FR GB IT LI LU NL SE**

(71) Anmelder: **BASF Aktiengesellschaft, Carl-Bosch-Strasse 38, D-6700 Ludwigshafen (DE)**

(72) Erfinder: **Zimmermann, Norbert, Jahnstrasse 6, D-6701 Waldsee (DE)**
Erfinder: **Daubach, Ewald, Dr., Thomas-Mann-Strasse 52, D-6700 Ludwigshafen (DE)**
Erfinder: **Beide, Horst, Dubliner Strasse 21, D-6700 Ludwigshafen (DE)**

(54) **Färbestabile Modifikation eines Azo-Dispersionsfarbstoffes, Verfahren zu deren Herstellung und deren Verwendung.**

(57) Die Erfindung betrifft färbestabile $\beta$-Modifikation des Farbstoffes der Formel I

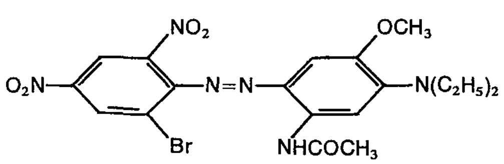
,

gekennzeichnet durch das in Figur 1 wiedergegebene Röntgendiagramm, das bei dem Beugungswinkel 2 $\Theta$ (Strahlung Kupfer-$K_\alpha$)
Linien starker Intensität bei 8,8°, 23,7°;
Linien mittlerer Intensität bei 5,1°, 5,8°, 7,1°, 8,4°, 9,2°, 11,4°, 12,3°, 13,5°, 15,4°, 18,5°, 19,9°, 21,3°, 21,6°, 22,4°, 23,0°, 23,9°, 25,0°, 26,1°, 27,0°, 27,4° und 28,3° und
Linien geringer Intensität bei 8,0°, 10,3°, 11,7°, 13,1°, 15,7°, 16,1°, 16,4°, 17,0°, 18,0°, 20,3° und 29,6° aufweist.

Die $\beta$-Modifikation des Farbstoffes ist hervorragend geeignet zum Färben von Polyestern.

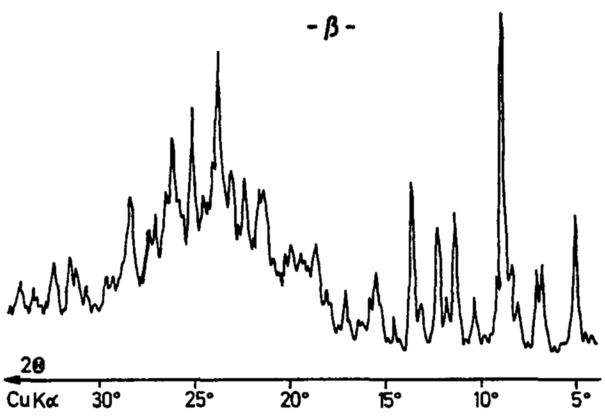


EP 0 030 291 A2

BEZEICHNUNG GEÄNDERT
siehe Titelseite

Färbestabile Modifikation eines Dispersionsfarbstoffes

Die Erfindung betrifft die neue ß-Modifikation des Farbstoffes der Formel I

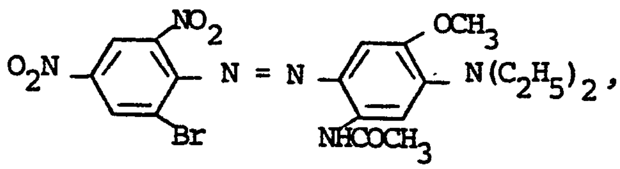

dessen Röntgenbeugungsdiagramm (Kupfer-$K_{\alpha}$-Strahlung) folgende Linien (Figur 1) aufweist:
Linien starker Intensität bei einem Beugungswinkel 2 bei 8,8°, 23,7°;
Linien mittlerer Intensität bei 5,1°, 6,8°, 7,1°, 8,4°, 9,2°, 11,4°, 12,3°, 13,5°, 15,4°, 18,5°, 19,9°, 21,3°, 21,6°, 22,4°, 23,0°, 23,9°, 25,0°, 26,1°, 26,4°, 27,0°, 27,4°, 28,3°;
Linien schwacher Intensität bei 8,0°, 10,3°, 11,7°, 13,1°, 15,7°, 16,1°, 16,4°, 17,0°, 18,0°, 20,3°, 29,6°.
Fp.: ~175 - 80°C.

Bekannt ist bisher nur die $\alpha$-Modifikation des Farbstoffes (Figur 2) mit folgenden Linien:
Linien starker Intensität bei einem Beugungswinkel 2 $\Theta$ bei 23,2°;
Linien mittlerer Intensität bei 6,5°, 7,9°, 9,2°, 11,3°, 17,0°, 19,6°, 21,1°, 21,5°, 24,2°, 24,9°, 25,3°, 26,4°, 26,5°, 28,6°, 29,8°;
Linien schwacher Intensität bei 5,6°, 13,1°, 13,4°, 18,9°.
Fp.: ~130 - 35°C.

Bg/BL

Die α-Modifikation ist unter den Bedingungen des Flottenfärbens zwischen 80 und 140°C, insbesondere beim Färben von Wickelkörpern, nicht dispersionsstabil. Es entstehen starke Ablagerungen auf dem Textilgut, die durch Nachbehandlung nicht zu entfernen sind und die die Färbung unbrauchbar machen.

Überraschenderweise ist die neue ß-Modifikation unter allen Färbebedingungen stabil und eignet sich hervorragend zum Färben von Textilmaterialien aus synthetischen linearen Polyestern bei Temperaturen zwischen 80 und 200°C. Insbesondere beim Färben von Wickelkörpern, z.B. Kreuzspulen, treten in keiner Phase des Färbevorganges Ablagerungen auf der Faser auf.

Die neue, färbestabile Modifikation kann z.B. durch 2 bis 18 stündige Behandlung der α-Modifikation in wäßriger Suspension im Autoklaven bei 100 bis 150°C, vorzugsweise bei 120°C, gegebenenfalls in Gegenwart von Dispergiermitteln wie Naphthalinsulfonsäure-Formaldehyd-Kondensationsprodukten, Ligninsulfonaten, Kondensationsprodukten aus Phenol/Kresol-Formaldehyd-Natriumsulfit oder anderen anionischen sowie auch nichtionogenen oberflächenaktiven Verbindungen, hergestellt werden.

Die Umwandlung von α → ß durch Erhitzen in wäßriger Suspension kann durch die Anwesenheit von wasserlöslichen Lösungsmitteln, wie Ethanol, Dimethylformamid, Glykol oder Aceton, beschleunigt werden.

Die färbestabile ß-Modifikation wird auch erhalten durch 1 bis 18, vorzugsweise 2 bis 8 stündiges Tempern des wasserfreien Farbstoffes bei ungefähr 105 bis 160, vorzugsweise 120 bis 150°C.

Die ß-Modifikation wird durch bekannte Maßnahmen in pulverförmige oder flüssige Zubereitungen übergeführt.

Dabei kommen als Dispergiermittel z.B. die oben genannten in Betracht.

Als Dispergiergeräte sind kontinuierlich und diskontinuierlich arbeitende Kneter, Korundscheibenmühlen, Kugelmühlen, Rührwerkskugelmühlen, Schwingmühlen oder Sandmühlen mit Mahlkörpern verschiedener Art geeignet.

In den nachfolgenden Beispielen beziehen sich alle Angaben über Teile auf das Gewicht.

Beispiel 1

30 Teile des Azofarbstoffes der Formel I werden unter Zusatz von
3 Teilen eines Naphthalinsulfonsäure-Formaldehyd-Kondensationsproduktes und
67 Teilen Wasser angeteigt und 12 Stunden bei 120°C im Autoklaven behandelt. Der pH-Wert wird vor der Autoklavenbehandlung auf 7 eingestellt.

Danach liegt der Farbstoff in der ß-Modifikation vor.

Anschließend stellt man durch Zugabe von
42 Teilen eines Ligninsulfonates auf einen Farbstoffgehalt von 40 % in der Trockensubstanz ein und vermahlt die Dispersion in einer Sandmühle, bis eine ausreichende Feinverteilung vorliegt.

Dann wird im Zerstäubungstrockner getrocknet.

Die Feinverteilung kann man nach der Mahlung und nach der Trocknung nach der von A. Schlottman, Textilpraxis 12, 62 (1957) sowie P. Richter und M. Vescia, Melliand 46, 622 (1965) beschriebenen Methode prüfen.
Als Dispergiermittel können bei der Vermahlung z.B. auch Naphthalinsulfonsäure-Formaldehyd-Kondensationsprodukte oder Kondensationsprodukte aus Phenol/Kresol-Formaldehyd-Natriumsulfit einzeln oder in Mischung verwendet werden.

Das so erhaltene Farbstoffpulver ist in Wasser leicht dispergierbar und eignet sich hervorragend zum Färben von Textilmaterial aus synthetischen Polyestern, wie Polyethylenglykolterephthalat oder chemisch analog aufgebauten Polymeren bei Temperaturen zwischen 100 und 140°.

Ein gravierender Vorteil der neuen ß-Modifikation besteht darin, daß die Färbeflotte auch bei lange dauernden Färbeprozessen bei Temperaturen zwischen 100°C und 140°C stabil bleibt und nicht zur Ausflockung und Abfiltration auf der Faser neigt.

Beispiel 2

30 Teile des Farbstoffes der Formel I werden mit
5 Teilen eines Phenol-Formaldehyd-Natriumsulfit-Kondensationsproduktes und
65 Teilen Wasser angeteigt und 10 Stunden bei 125°C bei ph 7 im Autoklaven gerührt.

Der Farbstoff liegt nach der Autoklavenbehandlung in der ß-Modifikation vor.

Beispiel 3

25 Teile des Farbstoffes der Formel I werden mit
5 Teilen eines Ligninsulfonates und
70 Teilen Wasser angeteigt und bei pH 7 12 Stunden bei $120^{o}C$ im Autoklaven gerührt.

Nach dieser Behandlung liegt der Farbstoff in der ß-Modifikation und kann wie in Beispiel 1 beschrieben in eine Dispersion überführt werden.

Beispiel 4

Das bei $90^{o}C$ im Umlufttrockenschrank auf einen Restwassergehalt von ungefähr 4 bis 6 % getrocknete Preßgut des Farbstoffes der Formel I wird ebenfalls im Umlufttrockenschrank auf $150^{o}C$ erhitzt und 8 Stunden bei dieser Temperatur gehalten.

Der Farbstoff liegt nach der Temperung in der ß-Modifikation vor und kann wie in Beispiel 1 in eine handelsübliche Dispersion überführt werden.

Patentansprüche

1. Färbestabile ß-Modifikation des Farbstoffes der Formel

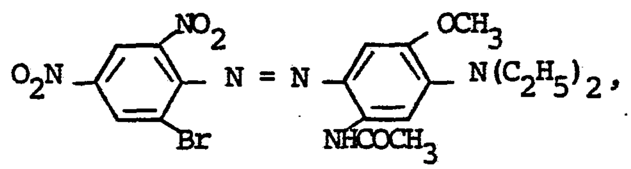

gekennzeichnet durch das in Figur 1 wiedergegebene Röntgendiagramm, das bei dem Beugungswinkel 2 Θ (Strahlung Kupfer-$K_{\alpha}$) Linien starker Intensität bei 8,8°, 23,7°; Linien mittlerer Intensität bei 5,1°, 5,8°, 7,1°, 8,4°, 9,2°, 11,4°, 12,3°, 13,5°, 15,4°, 18,5°, 19,9°, 21,3°, 21,6°, 22,4°, 23,0°, 23,9°, 25,0°, 26,1°, 27,0°, 27,4° und 28,3° und Linien geringer Intensität bei 8,0°, 10,3°, 11,7°, 13,1°, 15,7°, 16,1°, 16,4°, 17,0°, 18,0°, 20,3° und 29,6° aufweist.

2. Verfahren zur Herstellung der ß-Modifikation gemäß Anspruch 1, dadurch gekennzeichnet, daß man die α-Modifikation trocken oder in Wasser, gegebenenfalls in Gegenwart von Dispergiermitteln und/oder wasserlöslichen Lösungsmitteln auf Temperaturen zwischen 100 und 160°C erhitzt.

3. Die Verwendung der färbestabilen Modifikation des Farbstoffes gemäß Anspruch 1 zum Färben von synthetischen Polyestern.

Zeichn.

FIG. 1

-β-

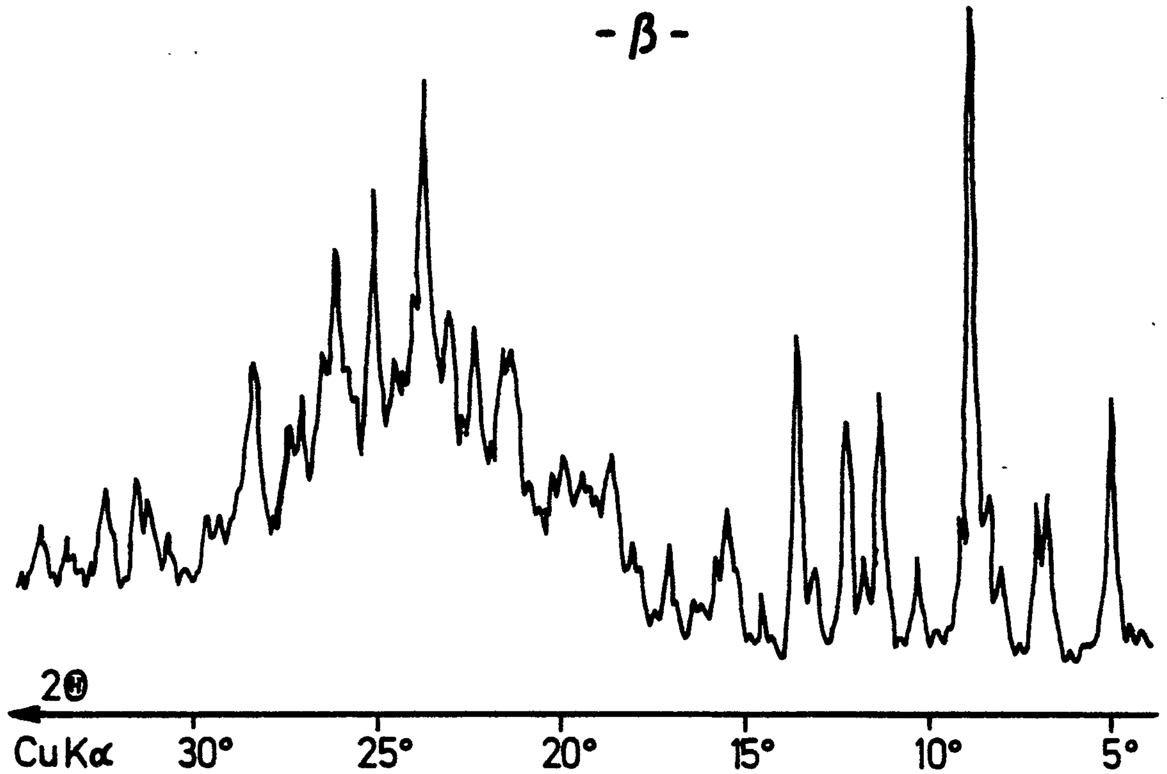

FIG. 2
- α -

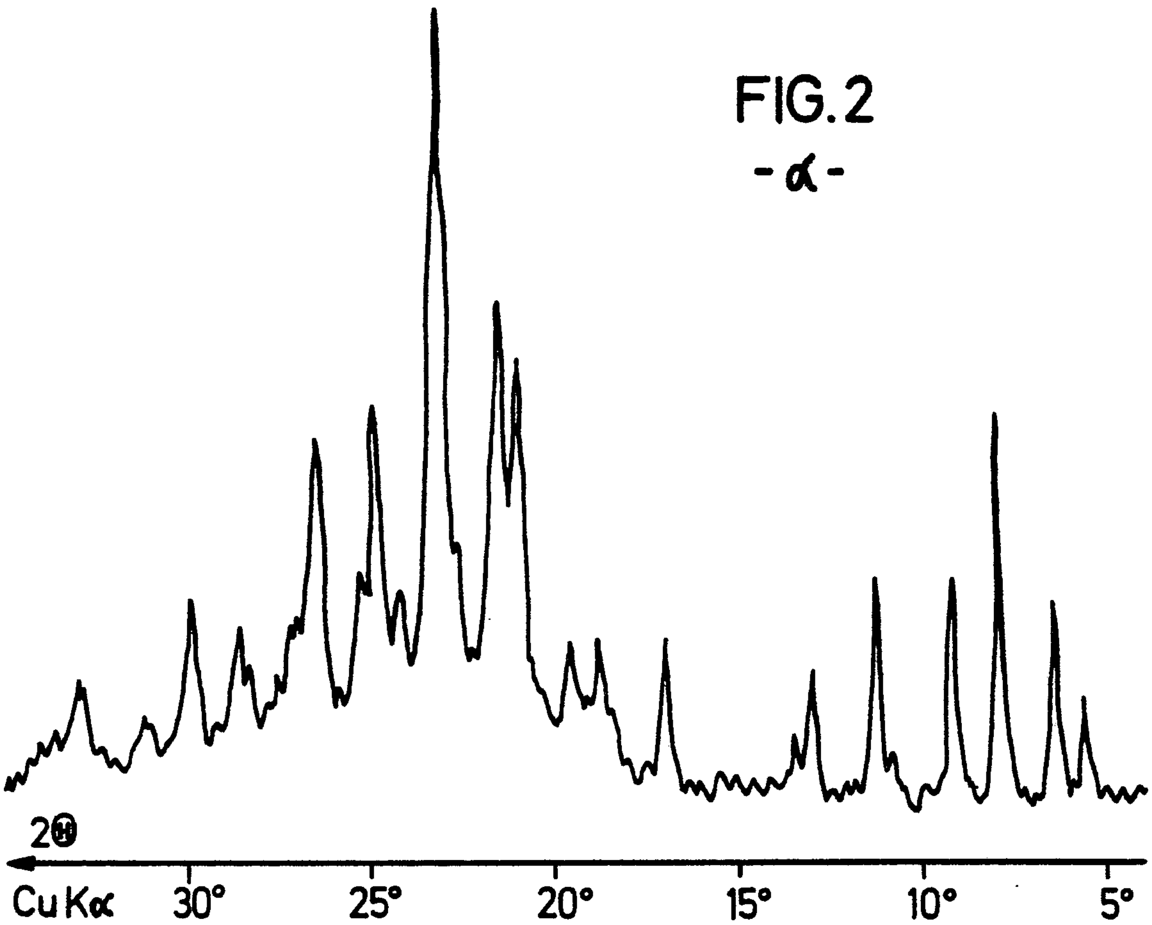

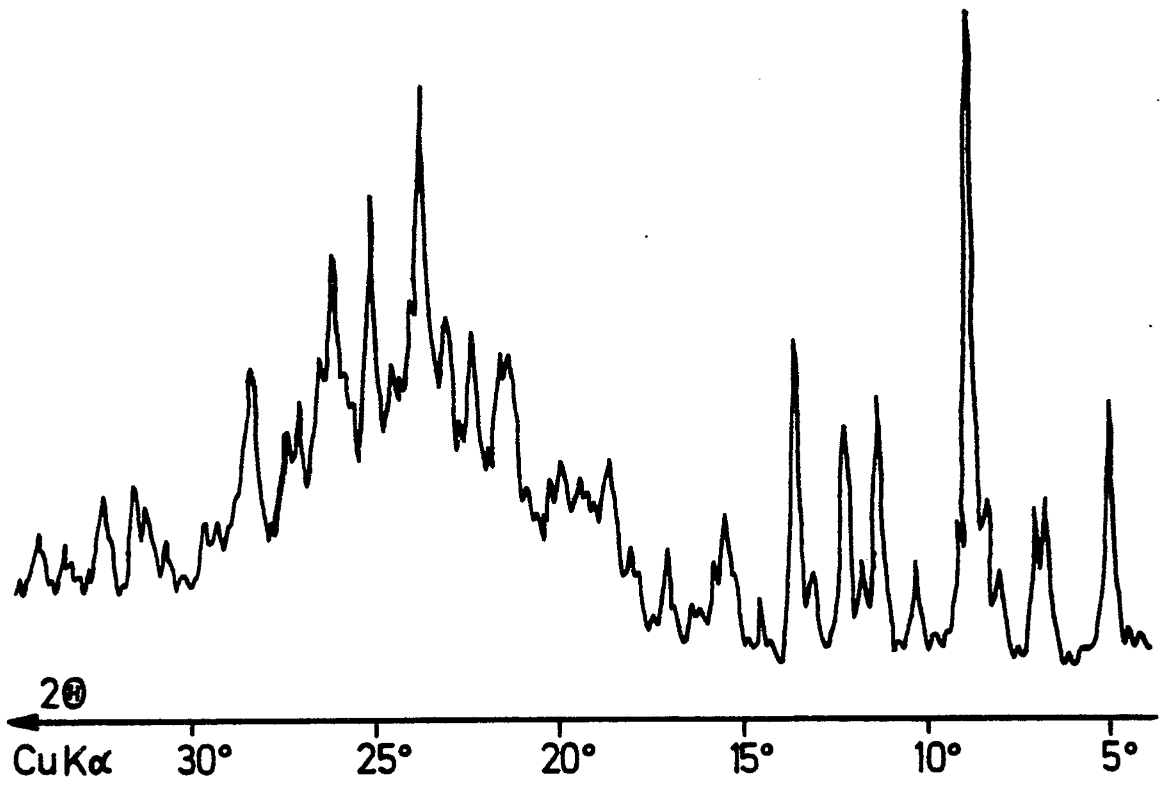
2Θ
CuKα
30°
25°
20°
15°
10°
5°